# FASCICULE DE BREVET EUROPEEN

(11) **EP 3 172 118 B1**
(45) Date de publication et mention de la délivrance du brevet: **06.05.2020**
(21) Numéro de dépôt: 14790655.6
(22) Date de dépôt: 22.07.2014
(51) Int. Cl.: B62D 21/15

(54) **DISPOSITIF DE VOIE BASSE POUR VÉHICULE AUTOMOBILE**
UNTERBEREICHSVORRICHTUNG FÜR EIN KRAFTFAHRZEUG
LOW AREA DEVICE FOR MOTOR VEHICLE

(43) Date de publication de la demande: 31.05.2017
(73) Titulaire: Renault s.a.s, 92100 Boulogne-Billancourt (FR)
(72) Inventeur: VITRY, Bernard, 78730 Saint Arnoult en Yvelines (FR); BOURLON, Franck, 28700 Aulnay sous Auneau (FR); CARIOU, Anthony, 72550 Coulans sur Gee (FR); LHOTTE, Julien, 78910 Behoust (FR); NEVEU, Christophe, 72650 St Saturnin (FR)
(86) Numéro de dépôt international: PCT/FR2014/051895
(87) Numéro de publication internationale: WO 2016/012659

(56) Documents cités:
- EP-A1- 1 388 485
- EP-A1- 1 955 930
- EP-A1- 2 423 078
- FR-A1- 2 971 980
- JP-A- 2000 053 020
- JP-A- 2009 241 700
- US-A1- 2011 316 295
- US-A1- 2012 056 447

## Description

L'invention concerne un dispositif de voie basse pour véhicule automobile.

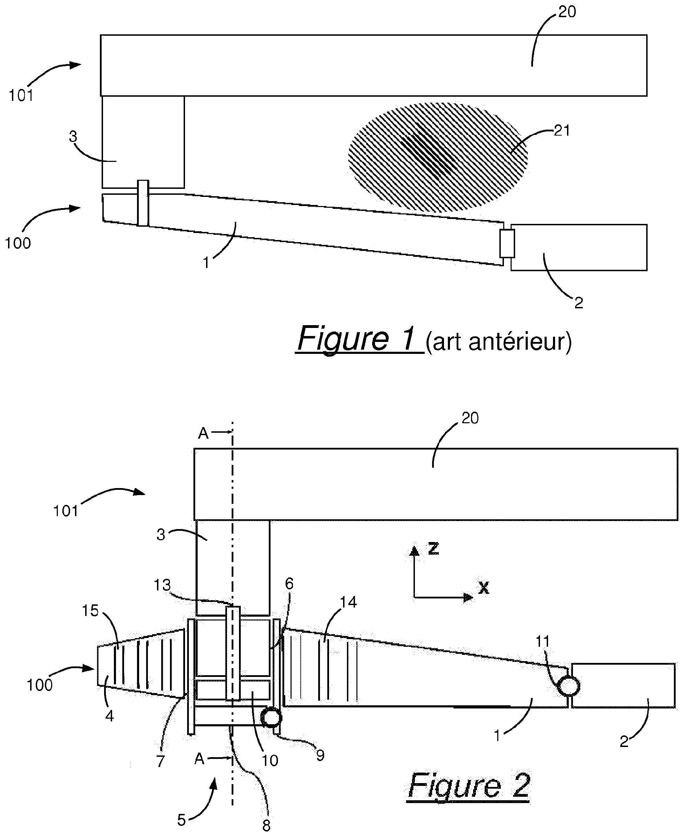

En référence à la figure 1, la partie avant d'un véhicule automobile comporte une voie haute 101 et une voie basse 100.

La voie basse comprend un berceau 2, dont le rôle est de supporter une suspension avant, une prolonge 1 qui s'étend vers l'avant depuis le berceau 2, selon une direction longitudinale (axe X du véhicule), et un élément avant d'absorption de choc (non représenté), également appelé « absorbeur » ou « crash box », rapporté à l'avant de la prolonge. La prolonge 1, que l'on appelle également « add-on », se présente par exemple sous la forme d'une poutre. La voie basse est soumise à des contraintes d'architecture et à des contraintes d'assemblage, du fait notamment de sa proximité, au-dessus, avec la boîte de vitesses 21 et, au-dessous, avec la garde au sol.

La voie haute comporte un élément de structure du véhicule, appelé longeron avant 6 de la caisse. Le longeron avant 6 comprend généralement une partie arrière (non représentée) qui s'étend à l'arrière du berceau 2 et une partie avant qui s'élève au-dessus du berceau 2 et de la prolonge 1 et s'étend parallèlement au berceau. Un autre élément d'absorption de choc (non représenté) est rapporté à l'avant du longeron avant.

Un élément de liaison vertical 3, couramment appelé « pendeloque » ou « pendard », relie la voie basse et la voie haute. Il est généralement monté entre la prolonge 1 et le longeron avant 6.

La prolonge 1 peut être fixée, d'une part, à la pendeloque 3, et, d'autre part, au berceau 2, par exemple par vissage ou boulonnage.

En cas de choc, notamment frontal, la partie avant du véhicule a pour rôle d'absorber et de dissiper tout ou partie de l'énergie engendrée par le choc, en se déformant, afin d'amortir le choc et d'éviter toute déformation de l'habitacle. Ce rôle est essentiel pour assurer la sécurité des passagers dans l'habitacle.

Au niveau de la voie basse, un choc frontal provoque généralement au moins une déformation de l'élément avant d'absorption. En cas de choc de faible intensité (v<16km/h), seule la crash box se déforme et absorbe une partie de l'énergie du choc frontal. En cas de choc de forte intensité, la prolonge se déforme également, jouant ainsi également un rôle d'absorption. Du fait des contraintes d'architecture et d'assemblage, la voie basse présente généralement une faible section et une longueur importante. Il en résulte un comportement instable en cas de choc. Un dispositif de voie basse est connu du document EP 2423078 A1, qui divulgue les caractéristiques du préambule de la revendication 1, avec pour élément d'entretoise une poutre transversale présentant des surfaces planes parallèles faisant face aux extrémités des éléments d'absorption d'énergie placés en avant et en arrière de celle-ci.

La présente invention vient améliorer la situation.

A cet effet, l'invention concerne un dispositif de voie basse pour véhicule automobile comportant deux éléments d'absorption de choc, respectivement avant et arrière, caractérisé en ce qu'il comprend un élément d'entretoise entre les deux éléments d'absorption de choc, apte à transmettre de façon rigide des efforts longitudinaux engendrés par un choc, et comportant deux surfaces d'appui respectivement des deux éléments d'absorption. L'invention prévoit également que l'élément d'entretoise comprend une plaque avant transversale d'appui de l'élément d'absorption avant et une plaque arrière transversale d'appui de l'élément d'absorption arrière, et en outre une pièce de renfort en forme de U en section transversale et une autre pièce de renfort formant une équerre avec l'une des deux plaques d'appui.

Cette transmission rigide des efforts longitudinaux peut se faire sans déformation de l'élément d'entretoise.

En cas de choc, les surfaces d'appui de l'élément d'entretoise jouent un rôle de murs d'appui ou d'écrasement contre lesquelles l'un ou les deux éléments d'absorption viennent se comprimer, l'élément d'entretoise transmettant le cas échéant une partie des efforts produits par le choc sans se déformer. L'élément d'entretoise permet d'obtenir un dispositif de voie basse dont le comportement demeure stable en cas de choc, notamment en cas de choc de grande intensité.

Avantageusement, l'élément d'entretoise comprend des moyens de fixation à un élément de liaison à un dispositif de voix haute.

Ainsi, la voie basse est reliée à la voie haute au niveau de l'élément d'entretoise, ce qui assure la stabilité de la liaison entre voie basse et voie haute.

Ces différentes pièces de conception de l'élément d'entretoise, à savoir les deux plaques d'appui, la pièce de renfort en forme de U et la pièce de renfort formant équerre avec l'une des plaques d'appui, permettent une fabrication simple de l'élément d'entretoise.

Le dispositif peut également comprendre les caractéristiques avantageuses suivantes :
- ladite autre pièce de renfort formant équerre avec l'une des plaques d'appui est accrochée à l'autre plaque d'appui par l'intermédiaire d'un doigt de maintien introduit dans une ouverture ménagée dans ladite autre plaque, l'ouverture étant plus grande que la section transversale du doigt ;
- les deux pièces de renfort sont espacées l'une de l'autre et ménagent entre elles un espace de réception d'une portion de traverse de radiateur ;
- la section transversale de l'un au moins des deux éléments d'absorption augmente en direction de l'élément d'entretoise ;
- l'élément arrière d'absorption de choc comprend une prolonge de berceau.

L'invention concerne aussi un ensemble de voie basse pour véhicule automobile comportant deux dispositifs homologues de voie basse tels que définis ci-dessus.

L'invention concerne encore un véhicule automobile intégrant un tel ensemble de voie basse.

L'invention sera mieux comprise à l'aide de la description suivante de différentes formes de réalisation du dispositif de voie basse selon l'invention, en référence aux dessins annexés sur lesquels :
- La figure 2 représente une vue latérale schématique d'une forme de réalisation particulière du dispositif de voie basse selon l'invention ;
- La figure 3 représente une vue en coupe schématique selon AA de face du dispositif de la figure 2 ;
- La figure 4 représente une vue d'une plaque arrière de liaison du dispositif de la figure 2 ;
- La figure 5 représente une vue du dispositif de la figure 2, en fin de choc ;
- Les figures 6A et 6B représentent deux variantes de réalisation du dispositif de voie basse selon l'invention ;
- La figure 7 représente une autre variante de réalisation du dispositif de voie basse selon l'invention.

Par souci de clarté, les éléments analogues ou correspondants représentés sur les différentes figures portent les mêmes références.

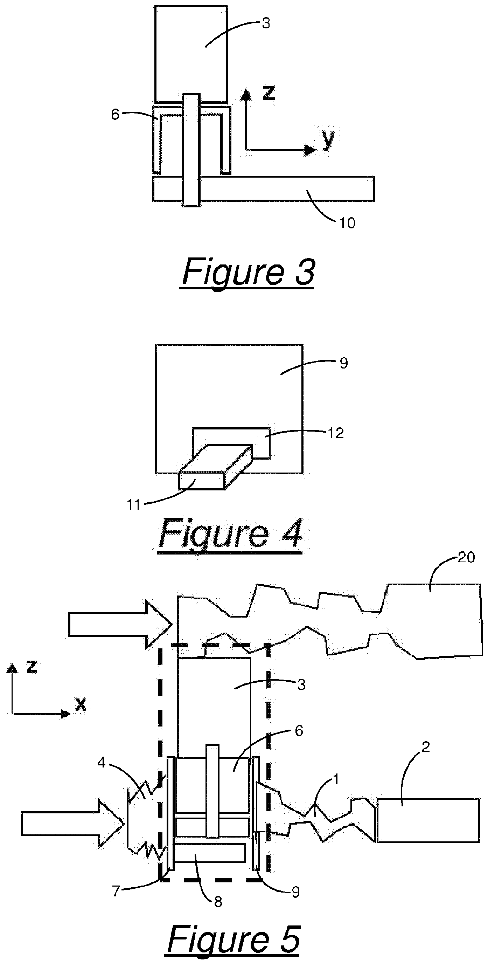

Un repère tridimensionnel orthogonal est également représenté sur les figures 2 et 3. L'axe z correspond à la verticale et les axes x, y définissent un plan horizontal. Sur les différentes figures, le dispositif de voie basse est représenté dans la position qu'il aurait une fois intégré dans un véhicule placé sur une surface plane et horizontale.

Par définition, les termes « avant » et « arrière » font référence au sens de déplacement en marche avant du véhicule. Le terme « longitudinal » correspond au sens de la longueur du véhicule, c'est-à-dire d'un axe médian traversant le véhicule par l'avant et par l'arrière, et parallèle (ou sensiblement parallèle) à la surface sur laquelle le véhicule se trouve.

Sur la figure 2, on a représenté un dispositif de voie avant de véhicule automobile, destiné à être monté sur la partie avant du véhicule, d'un côté du véhicule. La partie avant du véhicule comprend deux dispositifs de voie avant analogues respectivement situés des deux côtés, droite et gauche, du véhicule. Le dispositif de voie avant comporte un dispositif de voie basse 100 et un dispositif de voie haute 101.

Le dispositif de voie basse 100 comprend, de façon connue, un berceau 2, une prolonge 1, constituant un élément arrière d'absorption de choc, et un élément avant d'absorption de choc 4.

Le berceau 2 a pour rôle de supporter la suspension avant.

La prolonge 1, également appelée « add-on », est un corps creux ayant la forme d'une poutre, de section transversale ici rectangulaire, apte à se déformer en cas de choc, notamment de choc de grande intensité. Elle s'étend longitudinalement (c'est-à-dire dans le sens de la longueur du véhicule), selon une direction horizontale ou proche de l'horizontale, vers l'avant depuis le berceau 2. La prolonge 1 peut être fixée à l'arrière au berceau 2, par exemple par l'intermédiaire d'une vis d'axe horizontal selon la direction y ou d'axe vertical selon la direction z et par appui suivant la direction horizontale longitudinale x.

L'élément d'absorption avant 4, également appelé « absorbeur » ou « crash box », est rapporté à l'avant du dispositif de voie basse 100. Il s'agit d'un corps creux, de section transversale ici rectangulaire, apte à se déformer en cas de choc, notamment en cas de choc de faible, moyenne ou forte intensité.

Le dispositif de voie basse 100 comporte également un élément d'entretoise 5, disposé entre la prolonge 1 et l'élément d'absorption 4, autrement dit entre les deux éléments d'absorption avant et arrière. Cet élément d'entretoise 5 comporte les sous-éléments suivants :
- une première pièce de renfort 6,
- une plaque avant d'appui 7,
- une plaque arrière d'appui 9 et
- une deuxième pièce de renfort 8.

L'élément d'entretoise 5 est destiné à transmettre de façon rigide les efforts longitudinaux produits par un choc, notamment un choc frontal, subi à l'avant du véhicule, de l'élément d'absorption 4 à la prolonge 1, sans déformation de l'élément 5 lui-même. A cet effet, l'élément 5 présente une rigidité globale suffisante pour ne pas se déformer, en particulier par compression selon la direction longitudinale x, en cas de choc de faible intensité, puis par déformation de la prolonge 1 en cas de choc de forte intensité. Par « choc de faible intensité », respectivement « choc de forte intensité », on entend désigner un choc se produisant lorsque le véhicule se déplace à une vitesse inférieure, respectivement supérieure, à une vitesse limite, par exemple égale à 16km/h. Nous entendons donc par transmission de façon rigide le fait de transmettre les efforts sans déformation, voire avec une déformation négligeable relativement aux autres composants, comme l'absorbeur ou la prolonge, conçus pour se déformer dans certains chocs. Par élément d'entretoise, on entend designer un élément intermédiaire entre les éléments avant et arrière d'absorption de choc, ou un élément de liaison des éléments avant et arrière d'absorption de choc adapté pour assurer un écartement donné entre les éléments reliés.

Par élément d'absorption de choc, on entend designer un élément de déformation adapté pour se déformer en cas de choc.

La première pièce de renfort 6 s'étend longitudinalement, selon une direction horizontale ou proche de l'horizontale, entre les deux plaques 7 et 9, auxquelles elle est fixée par exemple par soudage. Elle présente ici une section transversale en forme de U renversé, les deux branches verticales du U étant dirigées vers le bas. Les plaques 7 et 9, de mêmes dimensions, sont plus grandes en hauteur (selon z) que la pièce de renfort 6 qui est positionnée dans la partie supérieure de l'espace ménagé entre les deux plaques 7, 9.

La deuxième pièce de renfort 8, de forme parallélépipédique, s'étend entre les deux plaques avant et arrière 7 et 9, au-dessous de la pièce 6. Elle est fixée à la plaque avant 7, par exemple par soudage, et forme avec celle-ci une équerre en forme de L. La face arrière de la pièce de renfort 8 est solidaire d'un doigt de maintien 11 accroché à la plaque arrière 9, par introduction dans une ouverture d'accrochage 12 ménagée dans celle-ci, comme représenté sur la figure 4. L'ouverture d'accrochage 12, ici rectangulaire, est plus grande que la section transversale, ici également rectangulaire, du doigt de maintien 11. En cas de choc, le doigt de maintien 11 est destiné à éviter la désolidarisation de la pièce de renfort 8 et de la plaque arrière 9.

Dans l'exemple particulier de réalisation décrit ici, les deux pièces de renfort, supérieure 6 et inférieure 8, sont espacées l'une de l'autre de manière à ménager entre elles un espace de réception d'une portion de traverse de radiateur 10. En variante, la traverse de radiateur 10 pourrait être interrompue de manière à ne pas s'étendre à travers l'élément d'entretoise 5. Dans ce cas, de préférence, la hauteur verticale de la pièce de renfort 6 est augmentée de manière à combler tout ou partie de l'espace entre les deux pièces de renfort 6 et 8.

Un élément de liaison 3, appelé « pendard » ou « pendeloque », relie verticalement la voie basse 100 et la voie haute 101. Il présente une forme allongée selon la direction verticale z (ou selon une direction proche de la verticale). L'élément de liaison 3 est fixé par une vis 13, ici verticale selon z, à la pièce de renfort supérieure 6 et à la traverse de radiateur 10. Pour le passage de la vis 13, des ouvertures de fixation (non représentées) sont ménagées à travers la paroi de la pièce de renfort 6 formant la base du U et à travers la traverse 10. La liaison entre voie haute et voie basse est ainsi réalisée au niveau de l'élément d'entretoise 5, ce qui contribue à rendre cette liaison plus stable.

De façon connue, le dispositif de voie haute 101 comprend un longeron avant de caisse de véhicule, dont une partie avant 20 surplombe la voie basse 100. La partie avant 20 du longeron avant est un corps creux en forme de poutre, qui s'étend longitudinalement et parallèlement au berceau 2.

Les deux pièces de renfort 6 et 8 et, le cas échéant, la traverse de radiateur 10 participent à l'entretoisement entre les plaques 7 et 9.

La prolonge 1 et l'élément d'absorption avant 4 sont fixés respectivement à la plaque arrière 9 et à la plaque avant 7, par exemple par soudage. Comme représenté sur la figure 2, la section transversale d'extrémité avant de la prolonge 1 est plaquée contre la plaque arrière 9, ici au droit de la première pièce de renfort 6 et de la traverse de radiateur 10. De même, la section transversale d'extrémité arrière de l'élément d'absorption 4 est plaquée contre la plaque avant 7, ici au droit de la première pièce de renfort 6 et de la traverse de radiateur 10. Les plaques 7 et 9 servent de surfaces d'appui plan pour l'élément d'absorption 4 et pour la prolonge 1 respectivement. Ces appuis plans servent à stabiliser le compactage de la voie basse quelle que soit la sollicitation exercée par un objet d'impact, par exemple une barrière déformable ou un mur rigide.

Pour améliorer la stabilité de la voie basse, des nervures saillantes 14 et 15 peuvent être prévues sur la prolonge 1 et sur l'élément d'absorption 4. Les nervures 14 sont par exemple réalisées sur les parois externes de la prolonge 1, dans une portion d'extrémité avant de celle-ci. Elles peuvent être parallèles au bord d'extrémité avant de la paroi de prolonge sur laquelle elles sont réalisées. De manière analogue, les nervures 15 sont par exemple réalisées sur les parois externes de l'élément d'absorption 4, dans une portion d'extrémité avant de celle-ci. Elles peuvent être parallèles au bord d'extrémité arrière de la paroi de l'élément 4 sur laquelle elles sont réalisées.

Pour améliorer encore la stabilité de la voie basse, la section transversale de la prolonge 1 peut augmenter vers l'avant, comme représenté sur la figure 2, en direction de l'élément d'entretoise 5, par exemple par écartement de parois opposées (parois latérales et/ou parois inférieure et supérieure). De même, la section transversale de l'élément d'absorption 4 peut augmenter vers l'arrière, en direction de l'élément d'entretoise 5, par écartement de parois opposées (parois latérales et/ou parois inférieure et supérieure). En augmentant les sections transversales d'appui de la prolonge et de l'élément d'absorption contre l'élément d'entretoise 5, on augmente l'appui de l'élément d'absorption 4 et de la prolonge 1 contre l'élément d'entretoise 5 et, conséquent, on augmente la stabilité de la voie basse. Ainsi, l'élément d'absorption 4 peut être en appui à l'arrière contre la plaque avant 7, sur une partie plus ou moins étendue de celle-ci. De même, la prolonge 1 peut être en appui à l'avant contre la plaque arrière 9, contre une partie plus ou moins étendue de celle-ci.

Les deux faces d'appui permettent d'ajuster, notamment d'aligner, le positionnement relatif des deux absorbeurs de choc suivant les directions y et z pour minimiser le porte à faux entre leur axe neutre respectif. D'autre part, il est avantageux de minimiser les jeux existant en x existant entre les pièces après assemblage pour garantir une meilleure stabilité.

Sur la figure 5, afin d'illustrer le comportement du dispositif de voie basse en cas de choc frontal de grande intensité (le véhicule se déplaçant par exemple à une vitesse supérieure à 16km/h), on a représenté la voie avant du véhicule en fin de choc. Il ressort de cette figure que, lors du choc :
- l'élément d'absorption avant 4 se comprime longitudinalement en venant en appui contre la plaque avant d'appui 7 qui joue un rôle de mur plan d'appui ;
- l'élément d'entretoise 5 transmet à la prolonge 1, sans se déformer, la partie de l'énergie engendrée par le choc et non dissipée par l'élément d'absorption 4;
- la prolonge 1 se comprime longitudinalement, en étant prise en sandwich entre la plaque d'appui 9, à l'avant, et le berceau 2, à l'arrière, la plaque d'appui 9 formant un mur d'appui plan contre lequel la prolonge 1 s'écrase ;
- la partie avant 20 du longeron avant se comprime également longitudinalement.

Grâce à la stabilité de la liaison, d'une part, entre l'élément d'absorption 4 et la prolonge 1 et, d'autre part, entre la voie basse 100 et la voie haute 101, les corps creux 1, 4 et 20 sont comprimés au maximum de leur potentiel lors du choc.

Dans une variante de réalisation, la plaque avant 7 comprend deux éléments de plaque, avant et arrière, plaqués l'un contre l'autre et fixés ensemble par exemple par boulonnage, vissage, soudure ou autre. L'élément de plaque avant est fixé à l'élément d'absorption 4 et l'élément de plaque arrière est fixé à la deuxième pièce de renfort 8 en formant une équerre en L. La première pièce de renfort 6 est par ailleurs fixée à l'élément de plaque arrière par exemple par soudure.

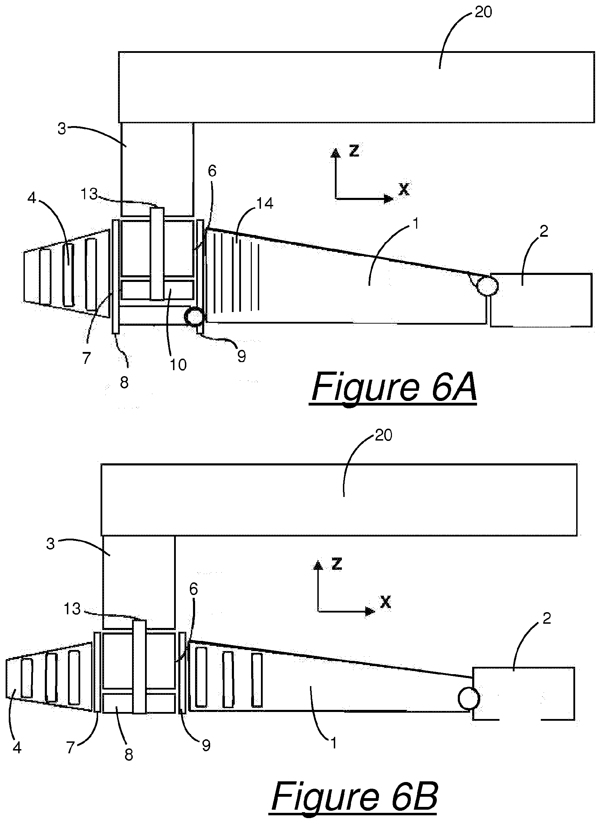

Sur les figures 6A et 6B, on a représenté deux variantes de réalisation du dispositif de voie basse selon l'invention, adaptées à deux structures différentes de véhicule.

La première variante de réalisation correspond à la forme de réalisation des figures 2 à 5, précédemment décrite. Elle est adaptée à une structure de véhicule dans laquelle la garde au sol du véhicule est de type « basse », située à une distance d1 du sol, telle que d1 est inférieure à une distance limite dₗᵢₘ. Typiquement, cette variante de réalisation convient aux véhicules de type monospace.

La deuxième variante de réalisation est adaptée à une structure de véhicule ayant une garde au sol de type « haute », située à une distance d2 du sol supérieure à la distance limite dₗᵢₘ. Cette deuxième variante de réalisation (figure 6B) diffère de la première variante de réalisation (figure 6A) par le fait que l'élément d'entretoise 5 comprend une seule pièce de renfort, en l'espèce la pièce supérieure de renfort 6. La pièce de renfort inférieure est supprimée pour une raison de gain de place.

Le dispositif de voie basse présente ainsi l'avantage d'avoir une structure modulaire et adaptative, permettant une adaptation à différentes structures de véhicule, avec un impact limité sur le processus de fabrication et/ou de montage du dispositif.

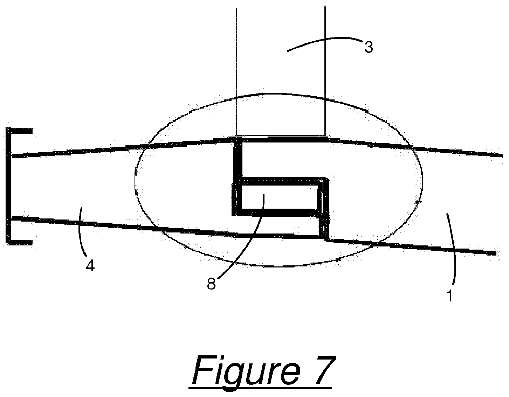

Sur la figure 7, on a représenté un autre exemple de réalisation, dans lequel l'élément d'entretoise est formé par une partie d'extrémité avant 16 prolongeant la prolonge 1 vers l'avant, au-dessus de la traverse de radiateur 13, et par une partie d'extrémité arrière 17, prolongeant l'élément d'absorption 4 vers l'arrière, au-dessous de la traverse de radiateur 13, celle-ci étant prise en sandwich entre les prolongements 16 et 17. Les faces avant de la traverse de radiateur 13 et de la prolonge 1 sont coplanaires et forment une surface ou plan d'appui de l'élément d'absorption 4. De manière analogue, les faces arrière de la traverse de radiateur 13 et de l'élément d'absorption 4 sont coplanaires et forment une surface ou plan d'appui de la prolonge 1.

Grâce à l'élément d'entretoise doté de surfaces d'appui des éléments, avant et arrière, d'absorption de choc, le comportement de la voie basse en cas de choc est amélioré. L'élément d'entretoise, incompressible en cas de choc, permet une transmission d'efforts produits par le choc de l'avant vers l'arrière. En outre, la voie basse présente une modularité lui permettant de s'adapter à différentes structures de véhicule, notamment à différentes hauteurs de garde au sol. La liaison entre voie basse et voie haute est également améliorée, notamment sur le plan de la stabilité en cas de choc.

## Revendications

1. Dispositif de voie basse pour véhicule automobile comportant deux éléments d'absorption de choc, respectivement avant (4) et arrière, et un élément d'entretoise (5) entre les deux éléments d'absorption de choc, apte à transmettre de façon rigide des efforts longitudinaux engendrés par un choc, et comportant deux surfaces d'appui respectivement des deux éléments d'absorption, **caractérisé en ce que** l'élément d'entretoise (5) comprend une plaque avant (7) transversale d'appui de l'élément d'absorption avant et une plaque arrière (9) transversale d'appui de l'élément d'absorption arrière, et **en ce que** l'élément d'entretoise (5) comprend une pièce de renfort (6) en forme de U en section transversale et une autre pièce de renfort (8) formant une équerre avec l'une des deux plaques d'appui.

2. Dispositif selon la revendication 1, **caractérisé en ce que** l'élément d'entretoise (5) comprend des moyens de fixation à un élément de liaison à un dispositif de voix haute.

3. Dispositif selon l'une des revendications précédentes, **caractérisé en ce que** ladite autre pièce de renfort (8) formant équerre avec l'une des plaques d'appui (7) est accrochée à l'autre plaque d'appui (9) par l'intermédiaire d'un doigt de maintien (11) introduit dans une ouverture (12) ménagée dans ladite autre plaque, l'ouverture étant plus grande que la section transversale du doigt.

4. Dispositif selon l'une des revendications précédentes, **caractérisé en ce que** les deux pièces de renfort (6, 8) sont espacées l'une de l'autre et ménagent entre elles un espace de réception d'une portion de traverse de radiateur.

5. Dispositif selon l'une des revendications précédentes, caractérisé la section transversale de l'un au moins des deux éléments d'absorption augmente en direction de l'élément d'entretoise.

6. Dispositif selon l'une des revendications précédentes, caractérisé l'élément arrière d'absorption de choc comprend une prolonge (1) de berceau (2).

7. Ensemble de voie basse pour véhicule automobile, **caractérisé en ce qu'**il comprend deux dispositifs de voie basse selon l'une des revendications précédentes.

8. Véhicule automobile intégrant un ensemble de voie basse selon la revendication 7.

## Patentansprüche

1. Unterbauvorrichtung für ein Kraftfahrzeug, die zwei Stoßfängerelemente, ein vorderes (4) bzw. ein hinteres, und ein Abstandshalterelement (5) zwischen den zwei Stoßfängerelementen aufweist, das von einem Stoß erzeugte Längskräfte starr übertragen kann, und zwei Auflageflächen der zwei Stoßfängerelemente aufweist, **dadurch gekennzeichnet, dass** das Abstandshalterelement (5) eine vordere Querplatte (7) für die Auflage des vorderen Stoßfängerelements und eine hintere Querplatte (9) für die Auflage des hinteren Stoßfängerelements enthält, und dass das Abstandshalterelement (5) ein im Querschnitt U-förmiges Verstärkungsbauteil (6) und ein anderes Verstärkungsbauteil (8) enthält, das mit einer der zwei Auflageplatten ein Winkelstück bildet.

2. Vorrichtung nach Anspruch 1, **dadurch gekennzeichnet, dass** das Abstandshalterelement (5) Befestigungseinrichtungen an einem Verbindungselement mit einer Oberbauvorrichtung enthält.

3. Vorrichtung nach einem der vorhergehenden Ansprüche, **dadurch gekennzeichnet, dass** das andere Verstärkungsbauteil (8), das mit einer der Auflageplatten (7) ein Winkelstück bildet, an der anderen Auflageplatte (9) mittels eines Haltefingers (11) befestigt ist, der in eine in der anderen Platte freigelassene Öffnung (12) eingeführt wird, wobei die Öffnung größer ist als der Querschnitt des Fingers.

4. Vorrichtung nach einem der vorhergehenden Ansprüche, **dadurch gekennzeichnet, dass** die zwei Verstärkungsbauteile (6, 8) einen Abstand zueinander haben und zwischen sich einen Aufnahmeraum eines Kühlerquerstrebenabschnitts freilassen.

5. Vorrichtung nach einem der vorhergehenden Ansprüche, **dadurch gekennzeichnet, dass** der Querschnitt mindestens eines der zwei Stoßfängerelemente in Richtung des Abstandshalterelements zunimmt.

6. Vorrichtung nach einem der vorhergehenden Ansprüche, **dadurch gekennzeichnet, dass** das hintere Stoßfängerelement eine Verlängerung (1) des Achsrahmens (2) enthält.

7. Unterbaueinheit für ein Kraftfahrzeug, **dadurch gekennzeichnet, dass** sie zwei Unterbauvorrichtungen nach einem der vorhergehenden Ansprüche enthält.

8. Kraftfahrzeug, das eine Unterbaueinheit nach Anspruch 7 enthält.

## Claims

1. Lower structure device for a motor vehicle comprising two impact absorption elements, respectively front (4) and rear, and a spacer element (5) between the two impact absorption elements, capable of rigidly transmitting longitudinal forces caused by an impact, and comprising two surfaces for respectively bearing the two absorption elements, **characterized in that** the spacer element (5) comprises a transverse front plate (7) for bearing the front absorption element and a transverse rear plate (9) for bearing the rear absorption element, and **in that** the spacer element (5) comprises a reinforcing part (6) in the form of a U in cross section and another reinforcing part (8) forming an angle bracket with one of the two bearing plates.

2. Device according to Claim 1, **characterized in that** the spacer element (5) comprises means for fastening to an element for connection to an upper structure device.

3. Device according to either of the preceding claims, **characterized in that** said other reinforcing part (8) forming an angle bracket with one of the bearing plates (7) is fastened to the other bearing plate (9) by way of a retaining finger (11) introduced into an opening (12) formed in said other plate, the opening being larger than the cross section of the finger.

4. Device according to one of the preceding claims, **characterized in that** the two reinforcing parts (6, 8) are spaced apart from one another and form between them a space for receiving a radiator crossmember portion.

5. Device according to one of the preceding claims, **characterized in that** the cross section of at least one of the two absorption elements increases in the direction of the spacer element.

6. Device according to one of the preceding claims, **characterized in that** the rear impact absorption element comprises an extension (1) of a cradle (2) .

7. Lower structure assembly for a motor vehicle, **characterized in that** it comprises two lower structure devices according to one of the preceding claims.

8. Motor vehicle incorporating a lower structure assembly according to Claim 7.
